# FASCICULE DE BREVET EUROPEEN

(11) **EP 4 188 873 B1**
(45) Date de publication et mention de la délivrance du brevet: **09.09.2026**
(21) Numéro de dépôt: 21751790.3
(22) Date de dépôt: 26.07.2021
(51) Int. Cl.: C01B 3/24, B01J 19/08

(54) **PRODUCTION OPTIMISÉE D'HYDROGÈNE À PARTIR D'UN HYDROCARBURE**
OPTIMIERTE HERSTELLUNG VON WASSERSTOFF AUS EINEM KOHLENWASSERSTOFF
OPTIMISED PRODUCTION OF HYDROGEN FROM A HYDROCARBON

(30) Priorité: 27.07.2020 FR 2007864
(43) Date de publication de la demande: 07.06.2023
(73) Titulaire: Plenesys, 06560 Valbonne (FR)
(72) Inventeur: KACEM, Ahmed, 06220 VALLAURIS (FR); TAKALI, Sabri, 06600 ANTIBES (FR)
(74) Mandataire: Hautier IP
(86) Numéro de dépôt international: PCT/EP2021/070893
(87) Numéro de publication internationale: WO 2022/023287

(56) Documents cités:
- WO-A1-93/12030
- DE-A1- 102015 219 862
- FR-A1- 2 701 267
- FR-A1- 3 035 657
- US-A1- 2016 296 905
- US-A1- 2019 381 475

## Description

### DOMAINE TECHNIQUE DE L'INVENTION

La présente invention concerne la production de dihydrogène à partir d'un hydrocarbure. Elle trouve plus particulièrement son application dans le secteur de l'énergie et joue donc un rôle crucial dans la transition énergétique. Elle peut également s'appliquer avantageusement pour le ravitaillement des véhicules à hydrogène dont la motorisation n'émet pas directement de gaz à effet de serre ou dans l'industrie.

### ETAT DE LA TECHNIQUE

Dans le contexte actuel, il existe un intérêt très important pour les solutions qui tentent de répondre aux enjeux énergétiques. Le changement climatique, la rareté des ressources et la multiplication des risques sanitaires environnementaux, sont les conséquences d'un modèle économique et social à faire évoluer.

La transition écologique est une évolution vers un nouveau modèle de développement durable qui renouvelle les habitudes de consommation, les façons de produire, les manières de travailler et de vivre ensemble pour répondre aux grands enjeux environnementaux.

L'hydrogène est souvent présenté comme l'énergie du futur. Il s'agit d'une forme ultime de carburant décarboné. Cependant, sa production actuelle est accompagnée d'émissions non négligeables de dioxyde de carbone, de l'ordre de 12 kg de dioxyde de carbone par kg de dihydrogène produit en utilisant le procédé de vaporeformage de méthane qui constitue la principale méthode des procédés de reformage de ressources fossiles représentant 98% de la production mondiale de dihydrogène. Bien qu'il soit bon marché, ce type de procédés est responsable de 2,25% des émissions mondiales de dioxyde de carbone avec un total de 720 millions de tonnes de dioxyde de carbone émises dans l'atmosphère chaque année.

Des recherches ont porté sur de nombreux procédés ou dispositifs qui permettent la production d'hydrogène bas carbone. Le plus connu d'entre eux est l'électrolyse de l'eau.

L'électrolyse de l'eau est un procédé qui demande la mise en place d'un dispositif consommant beaucoup d'énergie électrique et de ce fait il est relativement onéreux. Par ailleurs, l'attribution du caractère décarboné à l'hydrogène produit par électrolyse nécessite une électricité d'origine décarbonée, d'où une dépendance importante de ce procédé aux énergies renouvelables. Peinant déjà à remplacer les méthodes classiques polluantes de production d'électricité, les énergies renouvelables ne sont pas en mesure, ni aujourd'hui ni dans le futur proche, de couvrir la consommation croissante d'électricité pour la production de l'hydrogène par électrolyse.

Enfin, un procédé permet de s'affranchir des contraintes énoncées ci-dessus en présentant la possibilité d'une production d'hydrogène sans émission de dioxyde de carbone et à un prix bien moins onéreux que l'électrolyse. Ce procédé est le craquage d'hydrocarbure par voie plasma. La consommation théorique en électricité de ce procédé est égale à 5.27 kWh par kg de dihydrogène produit contre 39.4 kWh par kg de dihydrogène produit pour l'électrolyse de l'eau.

Le craquage d'hydrocarbure par plasma est un procédé déjà connu de l'état de la technique. Néanmoins, il convient de remarquer que jusqu'à présent, ce procédé est avant tout mis en œuvre dans l'objectif de fabriquer des produits carbonés et ne permet pas toujours une production d'hydrogène comme principal produit et à un coût compétitif.

En effet, l'opération de craquage consiste à casser la molécule d'un hydrocarbure en éléments plus petits. Les produits carbonés de cette opération peuvent être à l'état gazeux ou en partie à l'état solide.

Dès lors, les enjeux scientifiques et économiques ont poussé aux développements d'opérations de craquages d'hydrocarbures dans la mise en œuvre de dispositifs permettant la génération de produits carbonés, solides ou gazeux, en ne cherchant pas forcément à exploiter l'hydrogène formé au cours de l'opération.

En pratique, le produit carboné est conservé tandis que l'hydrogène présent dans la phase gazeuse reste un produit secondaire non mis en valeur par le procédé.

L'état de la technique atteste donc d'un procédé bien connu dans lequel un jet plasma vient craquer les hydrocarbures afin d'en extraire essentiellement soit du noir de carbone soit des alcynes ou des alcènes.

Le craquage d'hydrocarbure par plasma peut éventuellement entraîner un dégagement d'hydrogène sous forme de dihydrogène. Le dihydrogène rejeté par la réaction est alors considéré comme un produit secondaire (by-product) puisque le procédé était jusqu'alors centré sur les produits carbonés.

Afin de pouvoir garantir de l'hydrogène en tant que produit exploitable, par exemple dans le domaine de la mobilité, l'hydrogène doit ensuite être conditionné à des pressions avoisinant plusieurs centaines de bars.

Par conséquent, les procédés existants ne sont pas optimisés pour la production d'hydrogène.

Au sein du document FR2474043 A1 est dévoilé un procédé de craquage d'hydrocarbure utilisant une torche à plasma avec comme gaz porteur de l'azote et de l'oxygène dans des proportions que l'on peut retrouver dans l'air. Le craquage est mis en œuvre pour générer essentiellement un produit carboné, c'est-à-dire pour produire du « noir de carbone ».

Au sein du document US2016/296905 A1 est divulgué un procédé permettant de séparer du dihydrogène et du carbone par craquage d'un hydrocarbure à l'aide d'une torche à électrode tubulaire puis d'un labyrinthe permettant de coincer par gravité le produit carboné avec un débit horaire de gaz process de l'ordre de 1m³/h . Ce type de solution a pour objectif principal la production de carbone et la récupération du carbone après un cycle de fonctionnement.

Au sein du document FR2701267 A1 est dévoilé un procédé pour la fabrication de suies carbonées dans lequel on soumet à la décomposition thermique un hydrocarbure sous l'effet d'un plasma d'arc.

Il convient donc de constater que parmi les solutions existantes afin de produire de l'hydrogène à l'aide d'un craquage d'hydrocarbure, l'hydrogène produit, se résume généralement à un by-product, c'est-à-dire à un produit secondaire mélangé à d'autres éléments chimiques au sein d'une phase gazeuse dont le conditionnement ne permet pas une exploitation efficace.

En conclusion, la production par opération de craquage plasma d'un hydrocarbure ne permet pas la production optimisée de dihydrogène en tant que produit principal et nécessite de trouver un procédé et un dispositif améliorant l'existant.

Un objet de la présente invention est donc de proposer une invention ayant pour objectif la production optimisée et continue par opération de craquage plasma d'un hydrocarbure permettant la production optimisée de préférence en continu de dihydrogène en tant que produit principal.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, selon un mode de réalisation, on prévoit un procédé de fabrication d'un gaz de sortie contenant du dihydrogène, comprenant une injection d'un gaz d'entrée hydrocarboné, dans un réacteur, une opération de craquage du gaz d'entrée par la torche à plasma, puis une délivrance du gaz de sortie. Le procédé étant configuré pour que la fabrication s'effectue depuis l'injection du gaz d'entrée dans le réacteur jusqu'à la délivrance du gaz de sortie, sans que ni le gaz d'entrée, ni le gaz de sortie ne subissent de détente supérieure à 20%, la torche à plasma étant alimentée en courant triphasé et l'opération de craquage du gaz d'entrée s'effectuant avec un plasma dont un gaz vecteur est un mélange comprenant de l'hydrogène et/ou des hydrocarbures, le procédé comprenant au moins une opération de séparation effectuée en aval de l'opération de craquage pour séparer le gaz de sortie, d'un produit carboné solide, une partie du gaz de sortie étant utilisée, en aval d'une opération de séparation, dans le gaz vecteur.

Ainsi, ce procédé a la particularité de pouvoir générer avantageusement du dihydrogène sous pression avec de préférence, un taux de pureté satisfaisant et par conséquent facilement exploitable.

Il est bien connu des procédés usuels, qu'une fabrication de produits carbonés peut s'effectuer à l'aide d'une opération de craquage plasma. Or, on propose ici un procédé avantageusement optimisé, pouvant permettre la transformation d'un hydrocarbure en dihydrogène.

La transformation s'effectue préférentiellement au sein d'un réacteur sous pression par une opération de craquage plasma. Un hydrocarbure dans un état gazeux est de préférence injecté sous pression dans un réacteur où l'opération de craquage est effectuée.

En sortie du réacteur, le dihydrogène est avantageusement délivré sans avoir subi de détente, à savoir que la phase gazeuse n'a pas subi de détente.

Le procédé reprend les caractéristiques d'un craquage d'hydrocarbure par plasma mais le craquage est effectué de préférence, sous pression afin d'obtenir du dihydrogène le plus exploitable possible par la suite.

Il convient alors d'envisager le dihydrogène comme un produit principal de la réaction. Le dihydrogène en sortie de dispositif est, selon un exemple, à une pression supérieure ou égale à la pression d'entrée dans le réacteur ou n'excédant pas une perte de plus de 20%, puisqu'il transite au sein d'un dispositif étanche aux variations de pression.

D'une manière avantageuse, le dihydrogène en sortie de réacteur est contenu dans une phase gazeuse sous-pression qui permet de minimiser les étapes de pressurisation supplémentaire en sortie de dispositif. Ainsi, le dihydrogène en sortie de dispositif est plus facilement exploitable, comme par exemple, il peut être optimisé pour une utilisation en tant que gaz carburant destiné à des véhicules adaptés.

En effet, l'étape de pressurisation qui consiste à porter de l'hydrogène à une pression d'exploitation comme par exemple à la pression utilisée dans les véhicules à hydrogène, s'avère généralement moins complexe et moins onéreuse lorsqu'elle s'effectue depuis une pression déjà élevée, de préférence supérieure à 4 bars.

Au sein du document FR2474043 A1, il est divulgué une opération de craquage par plasma d'un hydrocarbure permettant l'extraction d'un produit carboné s'accompagnant d'un rejet gazeux. Ce rejet gazeux n'est pas exploité puisqu'il n'est qu'un produit secondaire pouvant notamment être composé d'espèces polluantes. De plus, ce document ne semble pas spécifier de production d'hydrogène. Le demandeur a noté que, de manière contre-intuitive, les premiers bars de pressurisation sont les plus coûteux. En effet, pour comprimer de l'hydrogène depuis la pression atmosphérique jusqu'à 20 bars, l'énergie nécessaire est comparable à celle pour passer de 20 bars à 350 bars. Concrètement, l'énergie théorique nécessaire pour comprimer de l'hydrogène de 1 à 20 bars est égale à 5,31 MJ par kg de dihydrogène. Cette énergie est égale à 4,96 MJ par kg de dihydrogène pour passer de 20 à 350 bars. Par ailleurs, l'énergie théorique nécessaire pour comprimer du méthane de 1 à 20 bars est égale à 0,61 MJ par kg de méthane. Ainsi, même si le débit massique du méthane à comprimer est 4 fois celui du dihydrogène pour le procédé de craquage, la compression du méthane en amont nécessite, d'un point de vue énergétique, moins de la moitié de l'énergie nécessaire pour la compression du dihydrogène produit en aval. Cela dit, l'énergie nécessaire à la compression du méthane peut être gratuite du point de vue du procédé car le fournisseur du gaz naturel peut garantir une pression minimale de raccordement allant jusqu'à 42 bars et ce sans surcoût.

Par ailleurs, le fonctionnement sous pression permet de compacter la taille de l'installation et de réduire les dimensions des équipements réduisant ainsi les pertes thermiques à travers les parois.

Alors que les techniques conventionnelles suggèrent l'emploi de torches à courant continu comme c'est le cas de US2016/296905 A1, on utilise ici avantageusement une torche triphasée. Cette technologie de torche plasma est particulièrement adaptée pour la production de dihydrogène par craquage d'hydrocarbure. En effet, la réaction de craquage nécessite un temps de séjour au-dessus de la seconde pour avoir un rendement de production d'hydrogène assez élevé. La torche plasma triphasée possède la capacité de fonctionner à des vitesses de gaz très faibles inférieur à 2m/s, de préférence inférieur à 1 m/s (de l'ordre du m/s voire moins si besoin) contrairement aux technologies de torche plasma à courant continu et à électrode tubulaire qui sont connues pour un jet plasma à haute vitesse. Ceci, rend, par conséquence, la torche plasma triphasée adaptée pour maitriser et contrôler le temps de séjour et donc le rendement de la réaction de craquage. Une conséquence directe de ce cas de figure est une longueur réduite du réacteur comparé à un réacteur couplé à une torche plasma à courant continu, pour un temps de séjour égal. Les pertes thermiques seront alors moindres. ;
Par ailleurs, les technologies à courant continu et à électrode tubulaire ne permettent pas un fonctionnement continu car nécessite l'arrêt de l'installation pour remplacer ces électrodes après leurs érosions. En effet, le remplacement des électrodes en cours de fonctionnement dans une configuration tubulaire est très compliqué.

Un autre avantage intrinsèque à l'utilisation de la technologie triphasée pour une opération de craquage sous pression, réside dans la perte de charge très réduite du gaz plasmagène contrairement au technologies à courant continu à électrode tubulaire qui implique une perte de charge de plusieurs bars rendant une opération de craquage à partir de 4 bar non intéressant avec cette technologie car son utilisation fait chuter considérablement la pression d'entrée.

Suivant une possibilité préférentielle dans cette invention, la fabrication d'hydrogène est réalisée en continu, en particulier sans arrêt de la fabrication pour renouveler les électrodes en utilisant le système de rechargement décrit dans le brevet WO2020229408A1
La réaction de craquage peut y être entretenue, avec une boucle de retour de gaz vecteur issu du gaz de sortie, formant un ensemble en cycle. Avec un tel cycle, et avec un maintien en volume de gaz travaillé, le demandeur a constaté de très bons rendements qui se traduisent par l'obtention d'hydrogène sous pression en sortie (n'impliquant donc pas nécessairement une compression ultérieure, ou en en limitant l'impact énergétique) et une consommation électrique réduite de la torche.

La réinjection d'une partie du gaz de sortie comme gaz vecteur agit en synergie avec la torche triphasée pour maîtriser la réaction de craquage, dans la mesure où cette réinjection permet de réintroduire de l'hydrocarbure résiduel après le craquage, étant rappelé que les hydrocarbures présentent une chaleur latente volumétrique supérieure à celle de gaz vecteur léger, du type hydrogène, ce qui contient l'élévation de température dans le réacteur.

Un autre aspect concerne un dispositif de fabrication d'un gaz de sortie contenant du dihydrogène, comprenant une ligne d'injection d'un gaz d'entrée hydrocarbonée, dans un réacteur comprenant une torche à plasma configurée pour produire une opération de craquage du gaz d'entrée et une ligne de délivrance du gaz de sortie, le dispositif étant configuré pour que du gaz d'entrée transite depuis son injection dans le réacteur jusqu'à sa restitution en gaz de sortie, sans subir de détente supérieure à 20%, la torche à plasma étant alimentée en courant triphasé et le dispositif étant configuré pour que l'opération de craquage du gaz d'entrée s'effectue avec un plasma dont un gaz vecteur est un mélange comprenant de l'hydrogène et/ou des hydrocarbures, le dispositif comprenant un séparateur situé en aval du réacteur et configuré de sorte à permettre la séparation du mélange gazeux en sortie du réacteur en un gaz de sortie et en un produit carboné solide, le dispositif étant configuré de sorte à ce qu'une partie du gaz de sortie soit réinjectée dans le gaz vecteur.

Néanmoins, il convient de préciser que l'expression sans subir de détente peut tolérer, en pratique, une baisse perceptible de pression relative entre un gaz entrant et un gaz sortant d'un élément du dispositif parmi un réacteur, un filtre ou un séparateur.

Cependant il convient de préciser également que cette détente n'excède pas 20% de baisse de pression relativement à la pression du gaz pénétrant par rapport à la pression du gaz sortant desdits éléments du dispositif.

Selon un autre aspect séparable, on prévoit un dispositif et un procédé de fabrication d'un gaz de sortie contenant du dihydrogène tels que la pression d'un gaz à base de dihydrogène issu du craquage, au moins immédiatement en sortie du réacteur, est supérieure à 4 bars, et de préférence supérieure ou égale à 5 bars.

De préférence, de manière alternative, ou en complément, cette pression immédiatement en sortie du réacteur est supérieure ou égale à la pression d'entrée dans le réacteur du gaz d'entrée.

### BREVE DESCRIPTION DES FIGURES

Les buts, objets, ainsi que les caractéristiques et les avantages de l'invention ressortiront mieux de la description détaillée d'un mode de réalisation de cette dernière qui est illustré par le schéma d'accompagnement suivant dans lequel :
La figure 1 représente un schéma technique simplifié du dispositif de la présente invention.
La figure 2 représente une variante du schéma technique du dispositif illustré en figure 1.

Les dessins et les schémas sont toujours donnés à titre d'exemples et ne sont pas limitatifs de l'invention. Ils constituent des représentations de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, l'injection du gaz d'entrée 1 est effectuée sous une pression d'injection p2, supérieure ou égale à 4 bars.

Cela permet, selon un mode de réalisation, d'anticiper la valorisation de l'hydrogène produit. En effet, dès lors que le gaz d'entrée 1 est injecté dans le réacteur 11, une opération de craquage se produit avantageusement à une pression d'injection p2 correspondante a minima à une pression de délivrance p3.

Ainsi, l'opération de craquage peut avantageusement s'effectuer à partir de réactifs sous pression. En effet, l'injection dans un réacteur 11 d'un mélange gazeux sous pression contenant des hydrocarbures permet d'anticiper la pressurisation finale du produit.

De ce fait, le niveau de pression atteint avant l'opération de craquage, est de préférence au moins égal à 4 bars et ne dévaluera pas jusqu'à l'obtention de l'hydrogène en fin de procédé. L'injection d'un gaz d'entrée 1 sous une pression au moins égale à 4 bars maximalise la valorisation du produit ambitionné, à savoir l'hydrogène, puisque la pressurisation du H2 est, à terme, nécessaire à son exploitabilité.

Selon un exemple, la température minimale à laquelle peut s'effectuer l'opération de craquage au sein du dispositif est de 1200°C.

Selon un exemple, le procédé comprend une compression jusqu'à une pression d'injection p2, en amont de l'injection dans le réacteur 11.

Cela permet selon un mode de réalisation, de garantir l'effet technique énoncé ci-dessus, à savoir l'injection dans le réacteur 11 du gaz d'entrée 1 contenant des hydrocarbures à une pression d'injection p2 dont la valeur peut être choisie afin d'optimiser le bon fonctionnement du procédé.

En effet, la compression permet éventuellement la montée en pression du gaz d'entrée 1 depuis une pression d'admission p1 jusqu'à une pression d'injection p2.

Selon un exemple, l'opération de craquage du gaz d'entrée 1 s'effectue avec un plasma dont un gaz vecteur 2 est un mélange d'hydrogène et d'hydrocarbure.

Selon un exemple, au démarrage du procédé, il est possible d'utiliser une réserve en matière première d'hydrogène communément désignée par le terme anglais : « feedstock » comme gaz vecteur pour le plasma.

Ainsi dès lors, l'injection d'hydrocarbure peut avantageusement commencer et le recyclage d'un gaz produit dans le réacteur pour alimenter le plasma peut démarrer. L'apport initial d'hydrogène peut alors être arrêté.

Selon l'exemple cité ci-dessus, il convient de préciser que l'hydrogène utilisé pour le démarrage n'est pas perdu mais est avantageusement récupéré comme produit du procédé. Il est donc possible, ensuite, de récupérer une partie de l'hydrogène produit pour faire redémarrer le procédé sans apport externe d'hydrogène.

Cela permet d'augmenter le rendement de fabrication et préférentiellement de ne pas rejeter de dioxyde de carbone. En effet, les opérations de craquage qui utilisent comme gaz vecteur 2 un mélange gazeux comprenant de l'azote et de l'oxygène dans les proportions dans lesquelles on les retrouve dans l'air ambiant, peuvent éventuellement rejeter du dioxyde de carbone ou créer des espèces toxiques comme le cyanure.

Selon un exemple, le procédé comprend au moins une opération de séparation effectuée en aval de l'opération de craquage pour séparer le gaz de sortie 3, du produit carboné 4 solide.

L'opération de séparation est susceptible de participer grandement à la fabrication du produit, notamment pour la séparation de la phase solide de la phase gazeuse. En effet, le craquage plasma d'un hydrocarbure peut avoir pour conséquence la génération de produit carboné 4 sous forme solide.

En effet, une opération de craquage pour produire de l'hydrogène est d'autant plus judicieuse si le produit carboné est principalement obtenu principalement dans sa phase solide.

Ainsi, la purification du dihydrogène est facilitée puisque la séparation de la phase solide et de la phase gazeuse, peut s'effectuer par exemple en utilisant un filtre à particules. La phase gazeuse restante est donc par conséquent plus concentrée en dihydrogène. De ce fait, il est plus aisé d'atteindre des taux de pureté en dihydrogène plus élevés.

Selon un exemple, une partie du gaz de sortie 3 est utilisée, en aval d'une opération de séparation, dans le gaz vecteur 2.

Etant donné que le gaz vecteur 2 utilisé est, selon un exemple, un mélange d'hydrocarbures et d'hydrogène sa présence en sortie du réacteur 11, lui permet avantageusement d'être réinjecté comme gaz vecteur 2.

En effet, la réinjection du mélange d'hydrocarbure et d'hydrogène en tant que gaz vecteur participe à l'optimisation du rendement matière de l'invention où les hydrocarbures restants sous forme gazeuse après l'opération de craquage peuvent, selon un exemple, jouer le rôle de gaz vecteur 2. Dans le cas de la présente invention, le mélange gazeux issu de l'opération de craquage est de préférence composé d'hydrogène et d'hydrocarbure et il peut ainsi être réinjecté comme gaz vecteur 2 sans devoir craindre le rejet de dioxyde de carbone.

Selon un exemple, le procédé comprend une opération de filtrage effectuée en aval d'une opération de séparation de sorte à produire un gaz de sortie purifié 6 à concentration plus importante en dihydrogène que le gaz de sortie 3.

Cette opération de filtrage permet préférentiellement de séparer les dernières molécules d'hydrocarbure restantes du dihydrogène souhaitable. En effet, suite à l'opération de séparation, la phase gazeuse et la phase solide ont pu être bel et bien séparées, néanmoins, au sein de la phase gazeuse, il convient d'y envisager encore la présence d'hydrocarbures, ainsi que des traces d'autres éléments chimiques comme de l'azote, de dioxyde de carbone, d'hélium, ou de sulfure d'hydrogène (H2S) qui peuvent être avantageusement filtrés par le filtre 10 ou bien en amont de l'injection dans le réacteur 8.

Ainsi, l'opération de filtrage participe à l'optimisation du produit souhaitable, à savoir du dihydrogène sous pression présentant de préférence le taux de pureté le plus élevé possible.

Selon un exemple, le gaz de sortie purifié 6 est stocké, à une pression de délivrance p3 supérieure ou égale à la pression d'injection p2, et de préférence strictement supérieure à la pression d'injection p2.

Cela permet d'accumuler avantageusement du dihydrogène sous pression sans craindre de pertes ou de dissipation du produit. En effet l'hydrogène produit, peut nécessiter un contenant de stockage 15 dans lequel il peut être stocké puis redistribué, de préférence, pour permettre son exploitation industrielle ou commerciale.

Selon un exemple, la pression de délivrance p3 est supérieure ou égale à 4 bars.

Cela permet par exemple, l'obtention et le stockage d'un produit à une pression plus facilement exploitable. En effet la montée en pression d'un gaz est d'autant plus complexe à mettre en œuvre que le gaz est à une pression de délivrance p3 basse.

Selon un exemple, l'opération de filtrage produit, outre le gaz de sortie purifié 6, du gaz hydrocarboné qui est réinjecté dans le réacteur plasma 11.

De manière préférée, l'opération de filtrage produit, outre le gaz de sortie purifié 6, du gaz hydrocarboné qui est réinjecté avec le gaz vecteur.

Cela permet éventuellement d'augmenter le rendement matière et permet avantageusement de limiter les pertes en hydrogène. En effet, en sortie de l'opération de filtrage, il est possible que des restes d'hydrocarbures subsistent et ils peuvent alors être réinjectés dans le réacteur 11 afin qu'une nouvelle opération d'extraction puisse y avoir lieu.

Selon un exemple, le gaz d'entrée 1 est du CH4.

Selon un exemple, une partie des produits carbonés 4 solide est délivrée et stockée.

Selon un exemple, la torche à plasma 12 est alimentée en courant triphasé.

Selon un exemple, l'opération de craquage s'effectue en continu grâce à l'utilisation d'une torche à plasma 12, dotée d'un système d'alimentation continue en électrodes 5.

Selon un exemple, la partie du gaz de sortie utilisée dans le gaz vecteur comprend du CH4.

Selon un exemple, on utilise une torche à plasma alimentée en continu en électrodes, de préférence de manière étanche aux variations de pression à l'intérieur du réacteur et sans interruption de fabrication du gaz de sortie.

Selon un autre mode de réalisation, le dispositif est configuré de sorte à ce que la ligne d'injection 13 comprenne une pluralité de trous d'injection débouchant dans le réacteur 11 et orientés suivant des directions distinctes et radiales par rapport à une direction de flux de gaz vecteur 2 dans le réacteur 11.

Cela permet de répartir de manière optimale le gaz d'entrée 1 composé d'hydrocarbure au sein du réacteur 11 sous pression. En effet de cette façon l'utilisation d'un système d'injection annulaire aura pour fonction, selon un exemple, d'assurer la bonne pénétration du gaz d'entrée 1, dans le gaz vecteur à l'état de plasma, au sein du réacteur 11.

Selon un autre mode de réalisation, l'invention concerne un dispositif comprenant un compresseur d'entrée 7 du gaz d'entrée 1 placé sur la ligne d'injection 13.

Cela permet de garantir l'injection à la pression d'injection p2 du gaz d'entrée 1 dans le réacteur 11.

En effet, le compresseur d'entrée 7 permet la montée en pression du gaz d'entrée 1 depuis une pression d'admission p1 jusqu'à une pression d'injection p2.

Selon un autre mode de réalisation, le dispositif dans lequel la torche à plasma 12 comprend des électrodes 5 est configurée de sorte à disposer d'une électrode active, c'est-à-dire en fonction dans le réacteur 11, par alimentation en continu et successive des électrodes, et ce de manière étanche aux variations de pression à l'intérieur du réacteur 11. Il n'y a ainsi pas de pertes de pression autour de l'électrode active passant au travers de la paroi du réacteur 11.

Cela permet la mise en œuvre d'une opération de craquage sous pression. En effet, un réacteur 11 configuré de sorte à comprendre des électrodes 5 pouvant permettre un craquage sous pression permet d'anticiper une éventuelle deuxième compression du produit. Ainsi, le niveau de pression atteint avant l'opération de craquage, ne dévaluera pas jusqu'au produit final.

Selon un autre mode de réalisation, le dispositif est étanche aux variations de pression, depuis la ligne d'injection 13 dans le réacteur 11 jusqu'à sa restitution du gaz de sortie 3.

Cela permet d'au moins maintenir sous pression la phase gazeuse au sein de la transformation sans qu'elle ait à subir de détente.

En effet, l'étanchéité du dispositif permet préférentiellement un craquage sous pression et une tenue de l'hydrogène sans détente.

Selon un autre mode de réalisation, le dispositif comprend un compresseur de sortie 8 en aval ou en amont d'un élément de stockage 15, depuis la pression de délivrance p3 jusqu'à une pression d'usage p4.

Cela permet éventuellement de renfermer le dihydrogène produit et par la suite de l'exploiter.

Selon un mode de réalisation particulier, au moins une partie du produit carboné 4 solide est délivrée et stockée.

Cela permet également d'optimiser le rendement de la transformation et ajoute à la production d'hydrogène, une génération d'un produit carboné 4, à savoir du carbone à l'état solide. En effet, une opération de craquage par plasma permet, dans un mode de réalisation, la fabrication optimisée de carbone solide à partir d'un hydrocarbure.

Avantageusement, la production d'hydrogène est accompagnée d'un produit secondaire carboné solide qui n'affecte pas le rendement énergétique par kg d'hydrogène. Ainsi, l'opération de craquage pour la production d'hydrogène peut avoir lieu pour des températures au-dessus de 1200°C.

L'opération de craquage étant préférentiellement rentable énergétiquement dès lors que l'on évite de monter vers des températures élevées.

En outre une production de type noir de carbone par exemple nécessite des températures élevées, de préférence aux alentours de 2000°C, ce qui abaisse le bilan énergétique du procédé par kg d'hydrogène.

De manière préférée, la torche à plasma 12 est alimentée en courant triphasé.

En effet en utilisant par exemple une technologie de torche à plasma 12 triphasée pour l'apport de chaleur avec comme gaz vecteur 2 un mélange d'hydrogène et d'hydrocarbure, la présente invention possède alors la configuration énergétique nécessaire pour réaliser un craquage d'un hydrocarbure sous pression.

En effet, la technologie de torche plasma triphasée est particulièrement adaptée à ce procédé de production d'hydrogène car possède une aptitude à fonctionner avec des vitesses de gaz vecteur assez faibles ce qui permet d'augmenter le temps de séjour et d'optimiser la production d'hydrogène.

Selon un mode de réalisation particulier, l'opération de craquage s'effectue en continu.

En effet, le craquage d'hydrocarbure pour la production d'hydrogène fonctionne avantageusement en continu grâce à l'utilisation de torche à plasma 12 dotée d'un système d'alimentation continue en électrodes 5.

Selon un mode de réalisation particulier, le dispositif est configuré de sorte que le craquage du gaz d'entrée 1 s'effectue sous pression d'injection p2 et transite ensuite au sein d'éléments étanches aux variations de pression.

Ainsi, selon un mode de réalisation, la circulation des réactifs sous pression est bénéfique pour les dispositifs dotés de torche plasma à arc.

En effet, la montée en pression du dispositif peut entraîner, à égale puissance, un arc électrique vers un point de fonctionnement à une tension supérieure ou égale à la tension liée au fonctionnement à pression atmosphérique.

De ce fait, selon cet exemple, le courant de fonctionnement sous pression est plus faible à égale puissance que celui à pression atmosphérique
Selon un mode de réalisation particulier, le dispositif est configuré :
- en ce qu'une partie du produit carboné 4 solide est délivrée et stockée au sein d'un élément de stockage spécifique à la conservation du produit carboné 4.
- en ce que la torche à plasma 12 est alimentée en courant triphasé.
- en ce que l'opération de craquage s'effectue en continu grâce à l'utilisation d'une torche à plasma 12, dotée d'un système d'alimentation continue en électrodes 5.

Selon un mode de réalisation particulier, le dispositif est configuré en ce que la ligne d'injection 13 comprend une pluralité de trous d'injection orientés suivant des directions distinctes et radiales par rapport à une direction de flux d'un gaz vecteur 2 dans le réacteur 11.

Selon un mode de réalisation particulier, le dispositif est configuré en ce qu'un compresseur d'entrée 7 du gaz d'entrée 1 placé sur la ligne d'injection 13.

Selon un mode de réalisation particulier, le dispositif est configuré en ce que la torche à plasma 12 comprend des électrodes 5 configurées de sorte à être alimentées en continu et ce de manière étanche aux variations de pression à l'intérieur du réacteur 11.

Selon un mode de réalisation particulier, le dispositif est configuré en ce qu'il soit étanche aux variations de pression, depuis la ligne d'injection 13, dans le réacteur 11 jusqu'à sa restitution du gaz de sortie 3.

Selon un mode de réalisation particulier, le dispositif est configuré en ce qu'il comprend un compresseur de sortie 8 en aval ou en amont d'un élément de stockage 15, depuis une pression de délivrance p3 du gaz de sortie 3 jusqu'à une pression d'usage p4, configuré de sorte à faire monter en pression le gaz de sortie 3 depuis une pression de délivrance p3 jusqu'à une pression d'usage p4.ll est précisé que dans le cadre de la présente invention, le terme « hydrogène » est employé de manière récurrente comme le produit visé par le procédé et pourra comprendre de manière synonymique le terme « dihydrogène » qui entend une forme moléculaire de l'élément hydrogène pouvant exister à l'état gazeux aux conditions de température et de pression prévues par le dispositif.

De plus il convient de préciser que « l'hydrocarbure » utilisé au sein du procédé et du dispositif est d'une manière préférée du méthane, dit « CH4 ». Dans le cadre de la présente invention, il peut s'agir également de la mise en œuvre d'un craquage de méthane ou d'un biométhane comprenant un hydrocarbure ou d'un mélange contenant principalement du CH4.

Ainsi, le gaz d'entrée 1 est selon un exemple, constitué d'un hydrocarbure, qui, de manière littérale sera composé essentiellement d'atomes de carbone et d'atomes d'hydrogène.

Il convient de distinguer les différents états physiques des réactifs et des produits engagés dans le procédé et le dispositif de la présente invention.

Il convient également de préciser que le terme « produit carboné » se différencie des réactifs comme un produit de la réaction de craquage comprenant en majorité des atomes de carbone.

On peut par exemple distinguer la « phase gazeuse » qui correspond à tout réactif ou produit circulant au sein du dispositif depuis l'admission jusqu'à la délivrance à l'état gazeux, de la « phase solide » qui par exemple est présente à travers les produits carbonés à l'état solide.

L'objet de la présente invention consiste en une fabrication d'un produit constitué essentiellement d'hydrogène à l'état gazeux. Par conséquent, il convient de porter un intérêt plus particulier aux éléments chimiques présents sous forme de gaz.

Il est précisé que, dans le cadre de la présente invention, le terme « gaz d'entrée » 1 comprend la phase gazeuse admise au début du procédé. Ainsi, il convient de considérer qu'avant l'opération de craquage, le gaz d'entrée 1 est de préférence la seule phase gazeuse considérée.

De manière préférée, le gaz d'entrée pourrait s'étendre à tout hydrocarbure qui soit à l'état gazeux ou pouvant être transformé jusqu'à un état gazeux comme par exemple à partir d'un état liquide notamment par pulvérisation.

Il est précisé que, dans le cadre de la présente invention, le terme « gaz vecteur » 2 qui comprend éventuellement le gaz nécessaire à la création d'une décharge au sein du réacteur 11, pourra également être nommé gaz porteur.

Par ailleurs, dans le cadre de la présente invention, il convient de préciser que le terme « gaz de sortie » 3, comprend la phase gazeuse en sortie du réacteur 11 où s'est déroulée l'opération de craquage. Ainsi on appelle gaz de sortie 3, la phase gazeuse avantageusement présente au sein du dispositif depuis la sortie du réacteur 11 jusqu'au filtre 10.

Il est précisé que dans le cadre de la présente invention, le terme « produit carboné » 4 comprend la phase solide issue de l'opération de craquage au sein du réacteur 11. Ainsi, le produit carboné 4 est de préférence généré puis séparé de la phase gazeuse lors de l'étape de séparation qui a lieu dans le séparateur 9.

De plus, il est précisé que dans le cadre de la présente invention, le terme « gaz de sortie purifié » 6 comprend le gaz de sortie 3 après avoir été possiblement filtré au sein du filtre 10. Ainsi il convient de considérer le gaz de sortie purifié 6 comme pouvant être un mélange gazeux optimisé de par sa teneur en hydrogène par rapport au gaz de sortie 3.

Il est précisé que dans le cadre de la présente invention, le terme « réacteur » 11 comprend l'élément du dispositif au sein duquel s'effectue l'opération de craquage. On entend par réacteur 11, tout élément pouvant permettre le craquage d'un hydrocarbure de préférence sous l'action d'un gaz vecteur transformé en plasma.

On entendra par « compresseur d'entrée » 7, tout dispositif permettant avantageusement la montée en pression du gaz d'entrée 1 depuis la pression d'admission p1 jusqu'à la pression d'injection p2.

Il est précisé que dans le cadre de la présente invention, le terme « compresseur de sortie » 8 comprend tout dispositif permettant la montée en pression du gaz de sortie 6 depuis la pression de délivrance p3 jusqu'à la pression d'usage p4.

Il est précisé que dans le cadre de la présente invention, le terme « séparateur » 9 comprend tout élément de dispositif permettant de séparer la phase gazeuse comprenant le gaz de sortie 3 de la phase solide comprenant par exemple le produit carboné 4 en sortie du réacteur 11.

Il est précisé que dans le cadre de la présente invention, le terme « filtre » 10 comprend tout élément de dispositif permettant de purifier en hydrogène le gaz de sortie 3.

Il est précisé que dans le cadre de la présente invention, le terme « électrodes » 5 comprend tout élément conducteur permettant éventuellement de capter ou de libérer des électrons au sein du dispositif.

On entendra par élément de stockage 15 tout élément permettant de contenir, de conserver ou de renfermer le gaz de sortie 3 ou le gaz de sortie purifié 6 en fin de procédé.

Le terme « torche à plasma » comprend tout élément permettant avantageusement d'ioniser partiellement un gaz en l'insufflant par exemple à travers un arc électrique très dense en énergie.

Le terme « torche à plasma » peut également comprendre les torches plasma à induction.

Il est précisé que dans le cadre de la présente invention, le terme « pression d'admission p1 » concerne selon un mode de réalisation, la pression à laquelle le gaz est introduit dans le dispositif.

Il est précisé que dans le cadre de la présente invention, le terme « pression d'injection p2 » concerne selon un mode de réalisation, la pression à laquelle le gaz d'entrée 1 est injecté dans le réacteur 11.

Il est précisé que dans le cadre de la présente invention, le terme « pression de délivrance p3 » concerne selon un mode de réalisation, la pression à laquelle le gaz de sortie 3 est délivré en sortie du réacteur 11.

Il est précisé que dans le cadre de la présente invention, le terme « pression d'usage p4 » concerne selon un mode de réalisation, la pression à laquelle le gaz de sortie 3 est stocké au sein de l'élément de stockage 15.

La présente invention concerne un dispositif permettant une transformation d'un hydrocarbure à l'état gazeux en hydrogène à l'état gazeux. La transformation a pour particularité de s'effectuer sans détente des phases gazeuses, autrement dit, les réactifs entrants jusqu'aux produits sortants ne subissent de détente.

Suivant une possibilité, l'absence de détente est le résultat d'une étanchéité d'une partie de la ligne de transformation, en particulier au niveau du réacteur 11 dans lequel le craquage est opéré, puis dans la ligne de délivrance 14 du dihydrogène. Ainsi, la pression d'injection p2 est préservée. Les termes « sans expansion », « sans détente », « sans perte de pression » et « étanche » s'entendent comme pouvant admettre de légères baisses de pression (de 20% au plus) ou quelques fuites, du fait, par exemple, des limites d'étanchéité de certains raccords, ou encore de la zone de passage de l'électrode active de la torche à plasma 12 au travers de la paroi du réacteur 11. Ces légères baisses de pression peuvent également survenir à cause des pertes de charges inévitables dans le séparateur 9 ou dans le filtre 10.

Selon un mode de réalisation, il peut s'avérer que la pression d'injection p2 diffère légèrement de la pression de délivrance p3 de sorte à ce que p2 soit supérieure à p3.

En effet, afin que la pénétration du gaz d'entrée 1 s'effectue de manière optimale au sein du réacteur 11, le gaz d'entrée 1 peut préférentiellement nécessiter d'être conditionné à une pression d'injection p2 supérieure à la pression présente au sein du réacteur 11.

Typiquement, l'expression « sans expansion » ou « sans détente », ou encore l'expression « sans perte de pression » peut tolérer, en pratique, une légère détente mais qui n'excède pas 20% de baisse de pression relativement à la pression d'injection p2.

Par conséquent, il convient de s'intéresser plus particulièrement à la pression des gaz et non aux éléments solides.

Dans le cadre de la présente invention, un gaz d'entrée 1 est admis à une pression d'admission p1 puis est de préférence pressurisé au sein d'un compresseur d'entrée 7 ce qui s'entend de tout dispositif permettant d'élever la pression d'un gaz. Le compresseur d'entrée 7 peut avantageusement être mécanique ou hydraulique.

Le gaz d'entrée 1 sort du compresseur d'entrée 7 à une pression d'injection p2 supérieure à la pression d'admission p1.

Le gaz d'entrée 1 comprend et de préférence consiste en un hydrocarbure qui subit une opération de craquage sous pression au sein du réacteur 11.

Une injection du gaz d'entrée 1 au sein du réacteur 11 s'effectue sous pression d'injection p2.

L'injection peut s'effectuer via une pluralité de trous d'injection débouchant dans le réacteur 11 et orientés suivant des directions distinctes et radiales par rapport à une direction de flux de gaz vecteur 2 dans le réacteur 11.

Ainsi, l'intégration d'une injection annulaire au niveau du réacteur 11 permet d'assurer une meilleure pénétration du CH4 ou d'un autre gaz d'entrée 1 dans une phase à l'état de plasma dans laquelle la viscosité peut être supérieure à celle d'un gaz à faible température.

Par ailleurs, cette opération peut nécessiter une énergie cinétique d'injection adéquate pour permettre la pénétration du plasma au sein du réacteur 11 et conditionner le mélange entre l'hydrocarbure et le gaz vecteur 2 à l'état de plasma.

En effet, à haute pression, la viscosité des gaz augmente ce qui rend l'homogénéisation du mélange plus difficile. Une injection annulaire permet principalement d'améliorer la configuration du flux et ainsi d'y contrôler la turbulence, surtout si les trous d'injection présentent une symétrie axiale.

Ainsi un procédé de craquage d'un hydrocarbure, s'effectue selon un mode de réalisation en continu grâce à l'utilisation d'une torche à plasma 12 munie d'un système d'alimentation continue en électrodes 5.

Notamment, le dispositif peut être équipé, à l'extérieur du réacteur 11, d'un dispositif d'alimentation en électrodes.

Ce dernier peut comprendre un magasin de stockage d'une pluralité d'électrodes 5 en attente d'utilisation. Le dispositif d'alimentation dispose en outre dans ce mode de réalisation d'un organe de descente d'une électrode active, depuis l'extérieur du réacteur 11, de manière à ce que l'électrode active plonge dans le volume intérieur du réacteur 11 et descende progressivement, au fur et à mesure de son usure. Lorsqu'elle est presque usée, l'électrode active est remplacée par une des électrodes en attente.

Ce remplacement peut s'opérer par l'intermédiaire d'un raccordement de l'extrémité externe de l'électrode active avec une extrémité inférieure de l'électrode en attente, de sorte à former un ensemble continu, l'électrode en attente remplaçant in fine l'électrode active lors du mouvement de descente dans le réacteur 11.

L'opération de craquage s'effectue au sein du réacteur 11 sans perte de pression, de sorte à ce que la pression d'injection p2 soit maintenue au maximum par l'étanchéité du dispositif.

Selon un mode de réalisation, l'opération de craquage s'effectue en utilisant une technologie de torche à plasma 12 triphasée pour l'apport de chaleur avec comme gaz vecteur 2 un mélange d'hydrogène et d'hydrocarbure.

Selon un exemple, pour une capacité de production de 12kg/h, il conviendra de fournir au dispositif une puissance de l'ordre de 120 kW.

Selon un exemple, pour un fonctionnement à 1 bar de la torche plasma, il convient de fournir une alimentation en tension de 500 V et une alimentation en courant de 150 A.

Selon un exemple, pour un fonctionnement à 20 bars de la torche plasma, il convient de fournir une alimentation en tension de 1500 V et une alimentation en courant de 50 A.

Ainsi, l'opération de craquage par plasma permet par exemple une dissociation d'un gaz de sortie 3 et d'un produit carboné 4 solide au sein d'un mélange hétérogène.

Un mélange hétérogène se produit et subit ensuite avantageusement une étape de séparation au sein d'un séparateur 9 où le gaz de sortie 3 et le produit carboné 4 sont divisés. Cette séparation peut être gravitaire.

Ainsi, on peut par exemple récupérer un produit carboné 4 solide ou un gaz de sortie 3 constitué d'un mélange gazeux comprenant de l'hydrogène et un reste d'hydrocarbure ayant éventuellement subsisté à l'opération de craquage si ce dernier n'est pas complet.

Une partie du mélange gazeux comprenant et typiquement composé d'hydrogène et du reste d'hydrocarbure non craqué, pourra selon un exemple, suite à l'étape de dissociation des phases, être utilisé comme au moins une partie du gaz vecteur 2 de la torche à plasma, dont la circulation dans le réacteur 11 génère le plasma. La partie du mélange gazeux peut être par exemple avantageusement mélangée avec du CH4.

En effet, l'utilisation par recirculation du gaz de sortie 3 comme gaz vecteur 2 pour le plasma peut permettre :
- d'éviter l'utilisation d'autres gaz vecteurs comme l'azote ou l'air ce qui peut empêcher par exemple la contamination de l'hydrogène ou bien la production de HCN ;
- de récupérer une partie de l'énergie que contient le gaz de réaction avec un objectif d'optimisation énergétique ;
- de craquer une partie de l'hydrocarbure au sein de la zone de décharge des torches à plasma 12 et de ce fait améliorer le rendement du craquage.

Au cours des étapes citées précédemment, et selon un mode de réalisation, il peut se produire une graphitisation du carbone, à savoir que le carbone avantageusement dissocié par l'opération de craquage précipite à l'état de graphite et cela notamment grâce à la montée en pression du dispositif dans lequel circulent les réactifs et dans lequel ils subissent des transformations.

Selon un mode de réalisation particulier, le dispositif de fabrication comprend un système de pompage 16 sur une ligne de recirculation située en aval du réacteur 11 et le système de pompage 16 est configuré pour rediriger une partie du mélange d'hydrocarbures et d'hydrogène depuis la sortie du réacteur 11 jusqu'à la ligne d'injection du gaz vecteur. Cela permet de compenser la perte de charge due au système de filtration. En effet, la réinjection d'une partie du gaz produit dans la torche nécessite une pression égale ou légèrement supérieure à celle de la ligne d'injection principale.

Selon un mode de réalisation particulier, la ligne de recirculation du mélange d'hydrocarbure et d'hydrogène en sortie du réacteur 11 est configurée pour diriger le mélange au moins en partie au niveau de la torche à plasma 12 et/ou au moins en partie, au sein du réacteur 11.

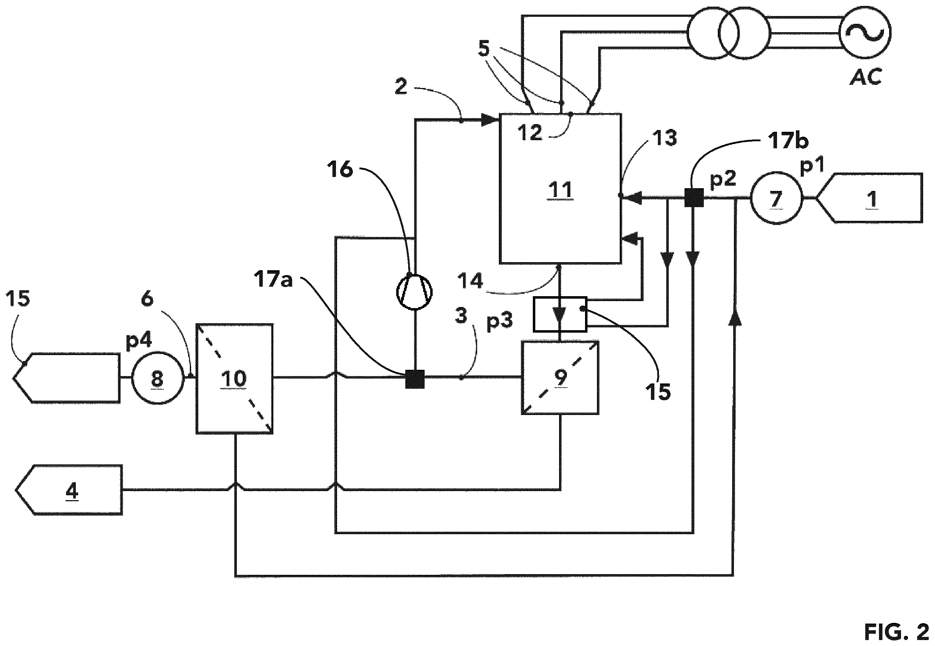

De manière préférée, comme illustré à la figure 2, le dispositif comprend au moins un premier dispositif de réglage 17a comprenant une vanne de régulation au niveau de la bifurcation en sortie du réacteur 11 entre la ligne de recirculation et la ligne menant au filtre 10. Le premier dispositif de réglage 17a permettant d'ajuster la proportion du mélange gazeux apte à recirculer pour être utilisé en tant que gaz vecteur 2. Le dispositif comprenant au moins une unité de calcul apte à communiquer avec l'au moins une vanne de régulation et configurée pour analyser les données dudit mélange et pour permettre un asservissement du réglage. Ainsi, le dispositif permet d'ajuster en proportion, la quantité des éléments qui composent le mélange gazeux recirculant et de ce fait optimise le rendement du dispositif 7

De manière préférée, le premier dispositif de réglage est configuré pour réguler la proportion en méthane (CH4) dans le gaz vecteur 2.

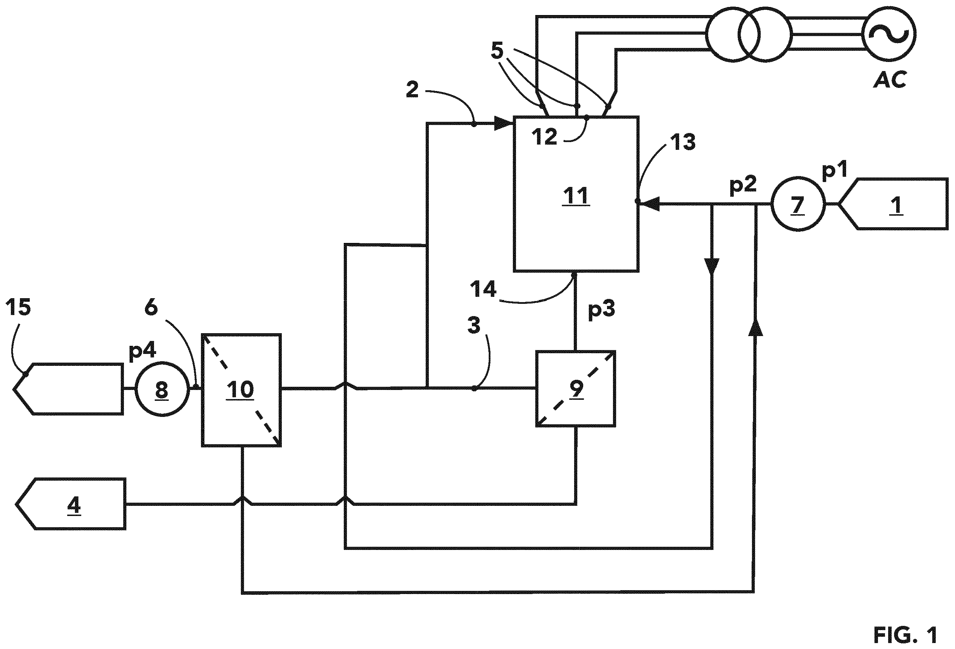

Selon un mode de réalisation particulier, toutes les lignes illustrée dans le dispositif aux figures 1 et 2 peuvent comprendre des moyens additionnels de régulation de débit, et l'ensemble pouvant être commandé depuis une même unité centrale.

Le produit carboné 4 obtenu, peut éventuellement être stocké au sein d'un contenant afin d'être récupéré et exploité ensuite.

En ce qui concerne le gaz de sortie 3, il circulera depuis l'étape de séparation jusqu'à une étape de filtration qui permettra de dissocier l'hydrogène des hydrocarbures qui n'ont pas été craqués.

Ainsi un filtre 10 qui s'entend de tout élément permettant une filtration du gaz de sortie 3, permet de transformer le gaz de sortie 3 en un gaz de sortie purifié 6. Ce dernier ne contient avantageusement que de l'hydrogène, par exemple avec un niveau de pureté supérieur à 99%.

Selon un exemple, en sortie du filtre 10, il convient de distinguer deux phases gazeuses :
- un gaz de sortie purifié 6 ;
- un mélange gazeux sous pression de délivrance p3 constitué d'hydrocarbures non craqués et d'hydrogène ;

Selon un exemple, le gaz de sortie purifié 6 est constitué essentiellement de dihydrogène à une pression de délivrance p3.

Selon un exemple, le gaz de sortie purifié 6 peut être une nouvelle fois pressurisé depuis une pression de délivrance p3 jusqu'à une pression d'usage p4.

En effet, un compresseur de sortie 8 permet préférentiellement la montée en pression du gaz de sortie purifié 6, d'une pression de délivrance p3 jusqu'à une pression d'usage p4.

Ainsi le gaz de sortie purifié 6 est par exemple contenu en sortie de dispositif, au sein d'un élément de stockage, à une pression d'usage p4.

Ainsi, typiquement :
- la pression d'injection p2 est supérieure ou égale à la pression de d'admission p1. Uniquement à titre d'exemple, elle peut être au moins quatre fois supérieure.
- la pression de délivrance p3 est supérieure ou égale à la pression d'injection p2.
- la pression d'usage p4 est supérieure ou égale à la pression de délivrance p3. Uniquement à titre d'exemple, elle peut être au moins dix fois supérieure. En outre ou alternativement, la pression d'usage p4 peut être supérieure à 200 bars, voire à 300 bars.

Ainsi selon cet exemple, le procédé s'effectue sans détente des phases gazeuses tout au long des étapes de la fabrication du dihydrogène.

Selon un mode de réalisation, une partie du mélange gazeux sous pression de délivrance p3 constitué d'hydrocarbures et d'hydrogène, issu de l'étape de filtration est réintroduit en entrée du réacteur 11.

Cela permet une recirculation des hydrocarbures dans le dispositif et de ce fait optimise le rendement dudit dispositif.

Cette réinjection des hydrocarbures peut se faire avant ou après le compresseur amont de l'installation, s'il est présent. De manière préférentielle, la réinjection des hydrocarbures peut s'effectuer dans le gaz vecteur.

Selon un mode de réalisation particulier, le séparateur 9 permettant la séparation du gaz de sortie 3 et du produit carboné 4 en aval du réacteur 11 comprend, voire est un filtre, de préférence un filtre à tampon comprenant des raccords à bride étanches au vide et présentant des surfaces électro-polies pour une meilleure manipulation des éléments à l'échelle nanométrique (10⁻⁹-10⁻⁷ mètres). En outre, selon ce même exemple, le séparateur 9 est configuré pour résister à des températures d'au moins 200°C. Ce système de filtration permettant ainsi d'assurer un fonctionnement continu, avec de préférence la possibilité de récupération de poudre de carbone sans obligation d'arrêt avec un système de sas.

Selon un mode de réalisation particulier, le dispositif comprend un échangeur thermique 15 en amont du séparateur 9 et en aval du réacteur 11. Cet échangeur thermique 15 peut être un échangeur gaz-gaz où le gaz frais peut être au moins une partie du gaz d'entrée 1 et/ou au moins une partie du gaz en sortie du compresseur d'entrée 7. Ainsi, l'échangeur thermique 15 permet au gaz d'entrée 1 de récupérer au moins partiellement la chaleur du mélange gazeux sortant du réacteur 11.

En effet, cela permet dans un même temps, de diminuer la température du mélange gazeux sortant du réacteur 11 avant son entrée dans le séparateur 9 et évite ainsi un endommagement du dispositif et ce, quel que soit le rendement de la réaction dans le réacteur 11. Par ailleurs, l'échangeur thermique 15 permet d'améliorer le rendement énergétique du procédé en récupérant une partie de la chaleur fatale du mélange gazeux en sortie du réacteur 11 en la transférant au gaz d'entrée 1 qui initialement peut être à température ambiante. L'échangeur thermique 15 étant configuré de sorte à ne pas induire une chute de pression supérieure ou égale à 20%.

Selon un exemple, pour une capacité de production de dihydrogène de 8 kg/h à 16kg/h à partir de méthane, il conviendra de fournir au dispositif une puissance de l'ordre de 80 à 160 kW. Cette capacité de production correspondant à un débit massique de méthane (CH₄), en entrée, de l'ordre de 30 à 70 kg/h. La flexibilité du fonctionnement du craquage par plasma permettant de fonctionner à des puissances plus faibles soit au minimum 20 % de la puissance du plasma ce qui correspond à un débit minimum de méthane de 10 kg/h équivalent à 15 Nm3/h.

Selon un exemple, la capacité de production de dihydrogène peut être multipliée par un coefficient, par exemple par 10 ou bien par 100 avec une mise à l'échelle de l'ensemble des équipements, sans que cette mise à l'échelle de la capacité de production ne soit nécessairement linéaire avec la mise à l'échelle des dimensions de l'installation. Avantageusement, l'ensemble des valeurs de débit et/ou de puissance pourront être adaptées en conséquence et de manière proportionnelle à la capacité de production.

Selon un mode de réalisation particulier, en sortie du séparateur 9, au niveau de la ligne de recirculation du mélange gazeux vers le réacteur 11, environ 50% du mélange gazeux contenant un pourcentage élevé d'hydrogène est apte à pouvoir recirculer vers le réacteur 11.

Par ailleurs, le dispositif est configuré de sorte à permettre une alimentation de ladite ligne de recirculation ou de la torche à plasma 12 par un débit d'hydrocarbure, de préférence du méthane (CH4).

Selon un mode de réalisation particulier, l'ensemble du gaz vecteur 2 comprend au moins une partie du gaz d'entrée 1 et/ou au moins une partie du gaz de sortie 3.
Préférentiellement, l'ensemble du gaz vecteur 2 comprend uniquement une partie du gaz d'entrée 1 et/ou uniquement une partie du gaz de sortie 3.

Le débit est préférentiellement compris entre 8kg/h et 16kg/h, de préférence entre 10kg/h et 14kg/h et de préférence à hauteur de 12kg/h en provenance du gaz d'entrée 1 et ayant subi avantageusement une compression dans un compresseur 7. Ce débit complémentaire de méthane permet de réduire préférentiellement la température du gaz plasmagène ou du gaz vecteur à puissance égale. Par exemple, le méthane présente une capacité calorifique volumique plus élevée que celle de l'hydrogène, à température et débit volumique égaux et peut ainsi contenir plus puissance.

L'invention n'est pas limitée aux modes de réalisations précédemment décrits et s'étend à tous les modes de réalisation couverts par les revendications.

### LISTE DES REFERENCES NUMERIQUES

- 1.: Gaz d'entrée
- 2.: Gaz vecteur
- 3.: Gaz de sortie
- 4.: Produit carboné
- 5.: Électrodes
- 6.: Gaz de sortie purifié
- 7.: Compresseur d'entrée
- 8.: Compresseur de sortie
- 9.: Séparateur
- 10.: Filtre
- 11.: Réacteur
- 12.: Torche à plasma
- 13.: Ligne d'injection
- 14.: Ligne de délivrance
- 15.: Echangeur thermique
- 16.: Système de pompage
- 17a.: Premier dispositif de réglage
- 17b.: Deuxième dispositif de réglage
- 15.: Élément de stockage
- p1.: Pression d'admission
- p2.: Pression d'injection
- p3.: Pression de délivrance
- p4.: Pression d'usage

## Revendications

1. Procédé de fabrication d'un gaz de sortie (3) contenant du dihydrogène, comprenant une injection d'un gaz d'entrée (1) hydrocarboné, dans un réacteur (11) à torche à plasma (12), une opération de craquage du gaz d'entrée (1) par la torche à plasma (12), puis une délivrance du gaz de sortie (3) , **caractérisé en ce que** la fabrication s'effectue depuis l'injection du gaz d'entrée (1) dans le réacteur (11) jusqu'à la délivrance du gaz de sortie (3), sans que ni le gaz d'entrée (1), ni le gaz de sortie (3) ne subisse de détente supérieure à 20%, la torche à plasma (12) étant alimentée en courant triphasé et l'opération de craquage du gaz d'entrée (1) s'effectuant avec un plasma dont un gaz vecteur (2) est un mélange comprenant de l'hydrogène et/ou des hydrocarbures, le procédé comprenant au moins une opération de séparation effectuée en aval de l'opération de craquage pour séparer le gaz de sortie (3), d'un produit carboné (4) solide, une partie du gaz de sortie (3) étant utilisée, en aval d'une opération de séparation, dans le gaz vecteur (2).

2. Procédé selon la revendication 1, dans lequel l'injection du gaz d'entrée (1) est effectuée sous une pression d'injection (p2), supérieure ou égale à 4 bars.

3. Procédé selon l'une quelconque des revendications précédentes, comprenant une compression jusqu'à une pression d'injection (p2), en amont de l'injection dans le réacteur (11).

4. Procédé selon l'une quelconque des revendications précédentes, comprenant une opération de filtrage effectuée en aval de l'opération de séparation de sorte à produire un gaz de sortie purifié (6) à concentration plus importante en dihydrogène que le gaz de sortie (3).

5. Procédé selon la revendication précédente dans lequel le gaz de sortie purifié (6) est stocké, à une pression d'usage (p4) supérieure ou égale à la pression d'injection (p2), de préférence strictement supérieure à la pression d'injection (p2).

6. Procédé selon la revendication précédente, dans lequel l'opération de filtrage produit, outre le gaz de sortie purifié (6), du gaz hydrocarboné qui est réinjecté dans le réacteur (11).

7. Procédé selon l'une quelconque des revendications précédentes dans lequel le gaz d'entrée (1) est du CH4, de préférence la partie du gaz de sortie (3) utilisée dans le gaz vecteur (2) comprend du CH4.

8. Procédé selon l'une quelconque des revendications précédentes dans lequel on utilise une torche à plasma (12) alimentée en continu en électrodes (5) de manière étanche aux variations de pression à l'intérieur du réacteur (11), sans interruption de fabrication du gaz de sortie (3).

9. Dispositif de fabrication d'un gaz de sortie (3) contenant du dihydrogène, comprenant une ligne d'injection (13) d'un gaz d'entrée (1) hydrocarbonée, dans un réacteur (11) comprenant une torche à plasma (12) configurée pour produire une opération de craquage du gaz d'entrée (1) et une ligne de délivrance (14) du gaz de sortie (3), le dispositif étant configuré pour que du gaz d'entrée (1) transite depuis son injection dans le réacteur (11) jusqu'à sa restitution en gaz de sortie (3), sans subir de détente supérieure à 20%, la torche à plasma (12) étant alimentée en courant triphasé et le dispositif étant configuré pour que l'opération de craquage du gaz d'entrée (1) s'effectue avec un plasma dont un gaz vecteur (2) est un mélange comprenant de l'hydrogène et/ou des hydrocarbures, le dispositif comprenant un séparateur (9) situé en aval du réacteur (11) et configuré de sorte à permettre la séparation du mélange gazeux en sortie du réacteur (11) en un gaz de sortie (3) et en un produit carboné (4) solide et de sorte à ce qu'une partie du gaz de sortie (3) soit réinjectée dans le gaz vecteur (2).

10. Dispositif selon la revendication précédente, dans lequel la ligne d'injection (13) comprend une pluralité de trous d'injection orientés suivant des directions distinctes et radiales par rapport à une direction de flux d'un gaz vecteur (2) dans le réacteur (11).

11. Dispositif selon l'une quelconque des deux revendications précédentes, comprenant un compresseur d'entrée (7) du gaz d'entrée (1) placé sur la ligne d'injection (13).

12. Dispositif selon l'une quelconque des trois revendications précédentes, dans lequel la torche à plasma (12) comprend des électrodes (5) configurées de sorte à être alimentées en continu et ce de manière étanche aux variations de pression à l'intérieur du réacteur (11), de préférence le dispositif étant étanche aux variations de pression, depuis la ligne d'injection (13), dans le réacteur (11) jusqu'à sa restitution du gaz de sortie (3).

13. Dispositif selon l'une quelconque des revendications 9 à 12, comprenant un compresseur de sortie (8) en aval ou en amont d'un élément de stockage (15), configuré de sorte à monter en pression le gaz de sortie (3) depuis une pression de délivrance (p3) jusqu'à une pression d'usage (p4).

14. Dispositif selon l'une quelconque des revendications 9 à 13, comprenant un système de pompage (16) sur une ligne de recirculation de la partie de gaz de sortie (3).

15. Dispositif selon l'une quelconque des revendications 9 à 14, comprenant un échangeur thermique (15) en amont du séparateur (9) et en aval du réacteur (11), de préférence l'échangeur thermique (15) est un échangeur gaz-gaz où le gaz frais est au moins une partie du gaz d'entrée (1).

## Patentansprüche

1. Verfahren zur Herstellung eines diwasserstoffhaltigen Ausgangsgases (3), umfassend die Einspritzung eines Kohlenwasserstoff-Eingangsgases (1) in einen Reaktor (11) mit Plasmabrenner (12), einen Crackvorgang des Eingangsgases (1) durch den Plasmabrenner (12) und anschließend eine Ausgabe des Ausgangsgases (3), **dadurch gekennzeichnet, dass** die Herstellung von der Einspritzung des Eingangsgases (1) in den Reaktor (11) bis zur Ausgabe des Ausgangsgases (3) erfolgt, ohne dass weder das Eingangsgas (1) noch das Ausgangsgas (3) eine Ausdehnung von mehr als 20 % aufweist, wobei der Plasmabrenner (12) mit Drehstrom versorgt wird und der Crackvorgang des Eingangsgases (1) mit einem Plasma durchgeführt wird, dessen Trägergas (2) eine Mischung aus Wasserstoff und/oder Kohlenwasserstoffen ist, wobei das Verfahren mindestens einen Trennvorgang umfasst, der nach dem Crackvorgang durchgeführt wird, um das Ausgangsgas (3) von einem festen Kohlenstoffprodukt (4) zu trennen, wobei ein Teil des Ausgangsgases (3) nach einem Trennvorgang im Trägergas (2) verwendet wird.

2. Verfahren nach Anspruch 1, wobei die Einspritzung des Eingangsgases (1) unter einem Einspritzdruck (p2) von 4 bar oder mehr erfolgt.

3. Verfahren nach einem der vorhergehenden Ansprüche, umfassend eine Kompression bis zu einem Einspritzdruck (p2), vor der Einspritzung in den Reaktor (11).

4. Verfahren nach einem der vorhergehenden Ansprüche, umfassend einen Filtervorgang, der nach dem Trennvorgang durchgeführt wird, um ein gereinigtes Ausgangsgas (6) mit einer höheren Diwasserstoffkonzentration als das Ausgangsgas (3) zu erzeugen.

5. Verfahren nach dem vorhergehenden Anspruch, bei dem das gereinigte Ausgangsgas (6) bei einem Gebrauchsdruck (p4) gespeichert wird, der größer oder gleich dem Einspritzdruck (p2) ist, vorzugsweise erheblich höher als der Einspritzdruck (p2).

6. Verfahren nach dem vorhergehenden Anspruch, wobei der Filtervorgang neben dem gereinigten Ausgangsgas (6) Kohlenwasserstoffgas erzeugt, das wieder in den Reaktor (11) eingespritzt wird.

7. Verfahren nach einem der vorhergehenden Ansprüche, wobei das Eingangsgas (1) CH4 ist, wobei der im Trägergas (2) verwendete Teil des Ausgangsgases (3) vorzugsweise CH4 umfasst.

8. Verfahren nach einem der vorhergehenden Ansprüche, bei dem ein Plasmabrenner (12) verwendet wird, der kontinuierlich mit Elektroden (5) versorgt wird und dicht gegen Druckschwankungen im Inneren des Reaktors (11) ist, ohne Unterbrechung der Herstellung des Ausgangsgases (3).

9. Vorrichtung zur Herstellung eines diwasserstoffhaltigen Ausgangsgases (3), umfassend eine Einspritzleitung (13) eines Kohlenwasserstoff-Eingangsgases (1) in einen Reaktor (11), umfassend einen Plasmabrenner (12), der so konfiguriert ist, dass er einen Crackvorgang des Eingangsgases (1) und eine Ausgabeleitung (14) des Ausgangsgases (3) erzeugt, wobei die Vorrichtung so konfiguriert ist, dass Eingangsgas (1) von seiner Einspritzung in den Reaktor (11) bis zu seiner Rückführung in das Ausgangsgas (3) durchfließt, ohne eine Ausdehnung von mehr als 20 % aufzuweisen, wobei der Plasmabrenner (12) mit Drehstrom versorgt wird und die Vorrichtung so konfiguriert ist, dass der Crackvorgang des Eingangsgases (1) mit einem Plasma durchgeführt wird, dessen Trägergas (2) eine Mischung aus Wasserstoff und/oder Kohlenwasserstoffen ist, wobei die Vorrichtung einen Abscheider (9) umfasst, der sich nach dem Reaktor (11) befindet und so konfiguriert ist, dass er die Trennung des Gasgemischs am Ausgang des Reaktors (11) in ein Ausgangsgas (3) und in ein festes Kohlenstoffprodukt (4) ermöglicht, sodass ein Teil des Ausgangsgases (3) wieder in das Trägergas (2) eingespritzt wird.

10. Vorrichtung nach dem vorhergehenden Anspruch, wobei die Einspritzleitung (13) eine Vielzahl von Injektionslöchern umfasst, die in unterschiedlichen und radialen Richtungen in Bezug auf eine Strömungsrichtung eines Trägergases (2) in den Reaktor (11) ausgerichtet sind.

11. Vorrichtung nach einem der beiden vorhergehenden Ansprüche, umfassend einen Einlasskompressor (7) des Einlassgases (1), der an der Einspritzleitung (13) angebracht ist.

12. Vorrichtung nach einem der drei vorhergehenden Ansprüche, wobei der Plasmabrenner (12) Elektroden (5) umfasst, die so konfiguriert sind, dass sie kontinuierlich und dicht gegenüber Druckschwankungen im Inneren des Reaktors (11) mit Strom versorgt werden, wobei die Vorrichtung vorzugsweise dicht gegenüber Druckschwankungen ist, von der Einspritzleitung (13) im Reaktor (11) bis zur Rückführung des Ausgangsgases (3).

13. Vorrichtung nach einem der Ansprüche 9 bis 12, die einen einem Speicherelement (15) nachgeschalteten oder vorgeschalteten Auslasskompressor (8) umfasst, der so konfiguriert ist, dass er das Ausgangsgas (3) von einem Ausgabedruck (p3) bis zu einem Betriebsdruck (p4) unter Druck setzt.

14. Vorrichtung nach einem der Ansprüche 9 bis 13, umfassend ein Pumpsystem (16) an einer Rezirkulationsleitung des Teils des Ausgangsgases (3).

15. Vorrichtung nach einem der Ansprüche 9 bis 14, umfassend einen Wärmetauscher (15) vor dem Separator (9) und nach dem Reaktor (11), wobei der Wärmetauscher (15) vorzugsweise ein Gas-Gas-Wärmetauscher ist, bei dem das Frischgas mindestens ein Teil des Eingangsgases (1) ist.

## Claims

1. A method for manufacturing an outlet gas (3) containing dihydrogen, comprising injecting a hydrocarbon inlet gas (1), into a plasma torch (12) reactor (11), an operation of cracking the inlet gas (1) by the plasma torch (12), and then delivering the outlet gas (3), **characterised in that** the manufacture is performed from the injection of the inlet gas (1) into the reactor (11) until the delivery of the outlet gas (3), without neither the inlet gas (1) nor the outlet gas (3) undergoing expansion greater than 20%, the plasma torch (12) being supplied with three-phase current and the operation of cracking the input gas (1) being performed with a plasma a carrier gas (2) of which is a mixture comprising hydrogen and/or hydrocarbons, the method comprising at least one separation operation performed downstream of the cracking operation to separate the outlet gas (3) from a solid carbon product (4), part of the outlet gas (3) being used, downstream of a separation operation, in the carrier gas (2).

2. The method according to claim 1, wherein injecting the inlet gas (1) is carried out under an injection pressure (p2), greater than or equal to 4 bar.

3. The method according to any one of the preceding claims, comprising compressing up to an injection pressure (p2), upstream of injecting into the reactor (11).

4. The method according to any one of the preceding claims, comprising a filtering operation performed downstream of the separation operation so as to produce a purified outlet gas (6) with a higher concentration of dihydrogen than the outlet gas (3).

5. The method according to the preceding claim, wherein the purified outlet gas (6) is stored, at an operating pressure (p4) greater than or equal to the injection pressure (p2), preferably strictly greater than the injection pressure (p2).

6. The method according to the preceding claim, wherein the filtration operation produces, besides the purified outlet gas (6), hydrocarbon gas which is reinjected into the reactor (11).

7. The method according to any one of the preceding claims, wherein the inlet gas (1) is CH4, preferably the part of the outlet gas (3) used in the carrier gas (2) comprises CH4.

8. The method according to any one of the preceding claims, wherein a plasma torch (12) continuously supplied with electrodes (5) is used in a manner that is impermeable to pressure variations inside the reactor (11), without interrupting manufacture of the outlet gas (3).

9. A device for manufacturing an outlet gas (3) containing dihydrogen, comprising an injection line (13) for injecting a hydrocarbon inlet gas (1), into a reactor (11) comprising a plasma torch (12) configured to produce an operation of cracking the inlet gas (1) and a delivery line (14) for delivering the outlet gas (3), the device being configured for inlet gas (1) to transition from its injection into the reactor (11) until return thereof as outlet gas (3), without undergoing expansion greater than 20%, the plasma torch (12) being supplied with three-phase current and the device being configured so that the operation of cracking the inlet gas (1) is performed with a plasma a carrier gas (2) of which is a mixture comprising hydrogen and/or hydrocarbons, the device comprising a separator (9) located downstream of the reactor (11) and configured so as to enable the separation of the gas mixture at the outlet of the reactor (11) into an outlet gas (3) and into a solid carbon product (4) and so that part of the outlet gas (3) is reinjected into the carrier gas (2).

10. The device according to the preceding claim, wherein the injection line (13) comprises a plurality of injection holes oriented along distinct and radial directions relative to a flow direction of a carrier gas (2) in the reactor (11).

11. The device according to any one of the two preceding claims, comprising an inlet compressor (7) for the inlet gas (1) placed on the injection line (13).

12. The device according to any one of the three preceding claims, wherein the plasma torch (12) comprises electrodes (5) configured to be continuously supplied in a manner that is impermeable to pressure variations inside the reactor (11), preferably the device being impermeable to pressure variations, from the injection line (13), into the reactor (11) to its return of the outlet gas (3).

13. The device according to any one of claims 9 to 12, comprising an outlet compressor (8) downstream or upstream of a storage element (15), configured so as to pressurise the outlet gas (3) from a delivery pressure (p3) to an operating pressure (p4).

14. The device according to any one of claims 9 to 13, comprising a pumping system (16) on a recirculation line of the part of outlet gas (3).

15. The device according to any one of claims 9 to 14, comprising a heat exchanger (15) upstream of the separator (9) and downstream of the reactor (11), preferably the heat exchanger (15) is a gas-gas exchanger wherein the fresh gas is at least part of the inlet gas (1).
